Europäisches Patentamt

European Patent Office

Office européen des brevets

(19)

(11) Publication number: **0 145 058**
A2

## (12) EUROPEAN PATENT APPLICATION

(21) Application number: **84201639.6**

(22) Date of filing: **13.11.84**

(51) Int. Cl.⁴: **F 04 B 35/04**

(30) Priority: **15.11.83 NL 8303904**

(43) Date of publication of application:
**19.06.85 Bulletin 85/25**

(84) Designated Contracting States:
**DE FR GB IT NL SE**

(71) Applicant: **N.V. Philips' Gloeilampenfabrieken**
**Groenewoudseweg 1**
**NL-5621 BA Eindhoven(NL)**

(72) Inventor: **Garenfeld, Andreas Johannes**
**c/o INT. OCTROOIBUREAU B.V. Prof. Holstlaan 6**
**NL-5656 AA Eindhoven(NL)**

(72) Inventor: **Videc, Bernard Peter**
**c/o INT. OCTROOIBUREAU B.V. Prof. Holstlaan 6**
**NL-5656 AA Eindhoven(NL)**

(74) Representative: **Melio, Jan Dirk et al,**
**INTERNATIONAAL OCTROOIBUREAU B.V. Prof.**
**Holstlaan 6**
**NL-5656 AA Eindhoven(NL)**

(54) Electrical vibrator-compression device.

(57) An electrical vibrator-compression device comprising a coil and a magnet movable with respect to each other, one of these two components being coupled to a piston-like body which is movable in a cylinder. The second component, which is not coupled to the piston-like body, is connected by means of springs to a housing to which the cylinder is connected. When the device is in operation, vibrations will be suppressed in a manner such that the cylinder housing substantially does not vibrate.

FIG.1

EP 0 145 058 A2

Croydon Printing Company Ltd.

"Electrical vibrator-compression device."

The invention relates to an electrical vibrator-compression device comprising a coil and a magnet movable with respect to each other, one of these two components being coupled to a piston-like body which is movable in a cylinder, which is surrounded by a cylinder housing, to vary the volume of a compression space in the cylinder, and other component, which is not coupled to the piston-like body, and any parts connected to said other component being supported by one or more springs.

A compression device of the above kind is known from DE-PS 1019331 and DE-OS 1628175. In these known devices, the coil together with the piston-like body is connected _via_ a spring system to the cylinder housing and the magnet, which is connected to the housing. The coil and piston-like body are then moved in a reciprocating manner in the field of the magnet at the frequency of the alternating current supplied to the coil, the natural frequency of the vibration system being adjusted so that it approaches the current frequency.

In these known devices, also the cylinder housing together with the magnet connected thereto will be set into vibration. In order to ensure that these vibrations have a minimum effect on thesurroundings, in the known devices the whole compression device is suspended by means of either helical springs or leaf springs in a compressor housing. These known devices have the disadvantage that an additional compressor housing is required and that the delivery pipe as well as the suction pipe have to join a vibrating cylinder.

The invention has for its object to provide an electrical vibrator-compression device, in which the cylinder housing substantially does not vibrate.

In order to achieve this object, the device according to the invention is characterized in that said
other component and any parts connected thereto are connected via the spring or springs to the cylinder housing.
Since the piston-like body always moves harmonically,
the device is subjected to a vibration whose amplitude
is inversely proportional to the weight of the device and
any parts connected thereto. Since the vibration produced
acts only in one direction, the resiliently arranged component now will act as a vibration suppressor, and with a
suitable choice of the mass of the magnet and the parts
connected thereto, vibration of the cylinder housing is
substantially entirely prevented. The second resiliently
arranged component may then be either the magnet or the
coil. The magnet may also be constituted by a soft-iron
part which moves in the magnetic field produced by the
coil. A further advantage of this construction  is that
the vibrations are suppressed without the addition of
further components increasing the weight and the volume.
According to a favourable embodiment of the invention,
the or each spring is in the form of a leaf spring. This
also ensures the straight-line guidance of the relevant
component. Besides the fact that springs of this kind also
ensure the straight-line guidance, compared with helical
springs they have the further advantage that they have a
small constructional length in the direction of vibration.

Two embodiments of the invention will be described more fully with reference to the drawing, in which

Figure 1 is a diagrammatic axial sectional view
of a compression device according to the invention in which
the magnet is supported by helical springs, and

Figure 2 is a diagrammatic axial sectional view
of a compression device according to the invention in
which the magnet is supported by diaphragm springs.

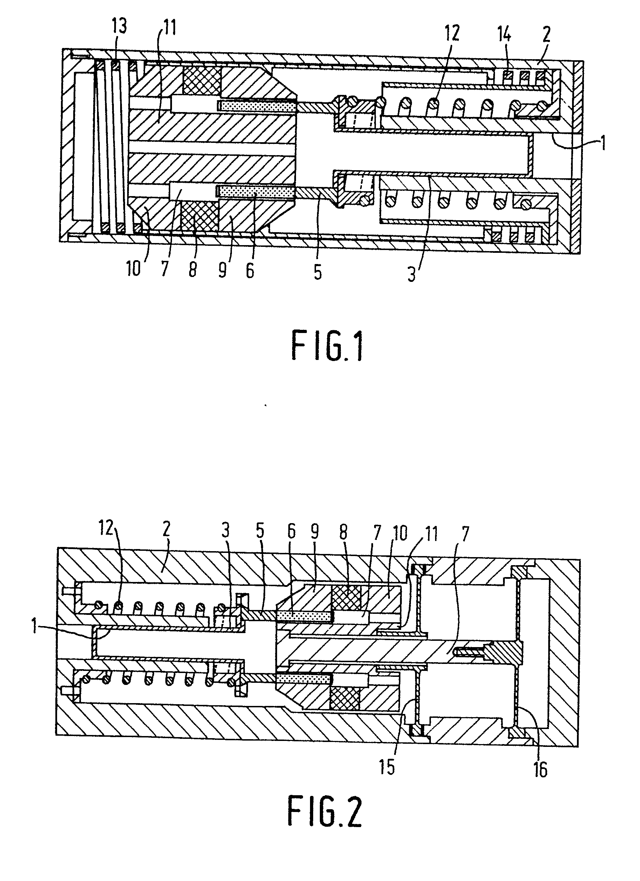

In Figure 1, reference numeral 1 denotes a
cylinder which forms part of a cylinder housing 2. A
piston 3 constituting the piston-like body of the device
is movable in the cylinder 1. The piston 3 is connected to
a part 5 of non-magnetizable material, which carries an electrical coil 6, which is provided in a manner not indicated further with a current supply.

The coil 6 can move in a reciprocating manner
in an annular gap 7, in which a permanent magnetic field
prevails, whose lines of force extend radially of the gap
in directions at right angles to the direction of movement
of the coil 6. The magnetic field is obtained by means of
an annular permanent magnet 8 with poles on both sides.
The magnet 8 is supported between two annular parts 9 and
10 of a soft-iron mass 11.

The piston 3 bears on one end of a helical
spring 12 whose other end bears on the cylinder housing
2, while the magnet 8 and the soft-iron mass 11 connected
thereto are supported between helical springs 13 and 14
which at their ends remote from the mass 11, also bear on
the cylinder housing 2.

The cylinder 1 may be provided, for example,
with a cover (not shown) having inlet and outlet valves.
When alternating current is supplied to the coil 6, the
coil 6 with the piston 3 connected thereto will move in a
reciprocating manner at a frequency equal to that of the
current supplied. The vibration produced by this movement
is reduced for the major part by the mass of the magnet
8, and the parts connected thereto, acting as a vibration
suppressor, which will vibrate substantially in phase
opposition to the piston. Thus, it is achieved that the
cylinder housing 2 substantially does not vibrate.

Figure 2 shows a compression device which comprises components similar to those of the device shown
in Figure 1, corresponding components being designated
by the same reference numerals in the two figures. The
two devices differ from one another in that the helical
springs 13 and 14 are now replaced by diaphragm springs
15 and 16, which are secured at their peripherie in the
wall of the cylinder housing 2 and at their centres to a
rod 17 on which the mass 11 with the magnet 8 is secured.

The operation of this device is identical to
that of the device shown in Figure 1, whilst the additional advantage is obtained that the straight-line guidance of the mass 11 etc. is ensured by the two diaphragm springs 15 and 16.

In the two embodiments, the coil is connected to the piston-like body and the magnet is resiliently connected to the cylinder housing. The invention may also be used in devices in which the magnet or a soft-iron core is connected to the piston-like body and the coil producing the field in which the magnet or the soft-iron core moves is resiliently connected to the cylinder housing.

**0145058**

## CLAIMS

1.      An electrical vibrator-compression device comprising a coil and a magnet movable with respect to each other, one of these two components being coupled to a piston-like body which is movable in a cylinder, which is surrounded by a cylinder housing, to vary the volume of a compression space in the cylinder, and the other component, which is not coupled to the piston-like body, and any parts connected to said other component being supported by one or more springs, characterized in that said other component and any parts connected thereto are connected via the spring or springs to the cylinder housing.

2.      A device as claimed in Claim 1, characterized in that the or each spring is in the form of a diaphragm spring.

0145058

FIG.1

FIG.2

PHN 10835